# EUROPEAN PATENT SPECIFICATION

(11) **EP 3 611 028 B1**
(45) Date of publication and mention of the grant of the patent: **17.12.2025**
(21) Application number: 19190942.3
(22) Date of filing: 09.08.2019
(51) Int. Cl.: B42D 25/369, B42D 25/378, B42D 25/41, B05D 3/00, B05D 5/06

(54) **OPTICAL SECURITY DEVICE BASED ON A SURFACE OF REVOLUTION**
OPTISCHE SICHERHEITSVORRICHTUNG AUF BASIS EINER UMDREHUNGSFLÄCHE
DISPOSITIF DE SÉCURITÉ OPTIQUE BASÉ SUR UNE SURFACE DE RÉVOLUTION

(30) Priority: 13.08.2018 US 201816102250
(43) Date of publication of application: 19.02.2020
(73) Proprietor: Viavi Solutions Inc., Chandler, AZ 85286 (US)
(72) Inventor: RAKSHA, Vladimir P., Santa Rosa CA 95403 (US); DELST, Cornelis Jan, Fairfax CA 94930 (US)
(74) Representative: Murgitroyd & Company

(56) References cited:
- WO-A1-2013/106462
- WO-A1-2013/106470
- WO-A1-2017/080698
- US-A1- 2016 187 546

## Description

### BACKGROUND

Some documents, such as monetary instruments, certificates, and/or the like, may use certain optical articles to combat counterfeiting. One example of such an optical article is an ink with a variable optical property (e.g., color, reflectivity) based on a viewing angle.

WO 2013/106462 A1, WO 2013/106470 A1, US 2016/187546 A1 and WO 2017/080698 A1 disclose optical security devices known in the art.

### SUMMARY

In accordance with the claimed invention, there is provided an optical article as defined in claim 1.

The surface of revolution may be defined based on a parabola or hyperbola.

The surface of revolution may be substantially shaped as a hyperbolic paraboloid.

The first axis may be a horizontal axis and the second axis is a vertical axis.

The first axis may be orthogonal to the second axis.

In a further aspect of the claimed invention, there is provided a method for forming an optical article on a substrate as defined in claim 5.

The surface of revolution may be substantially shaped as a hyperbolic paraboloid.

According to the invention, the one or more magnets includes two substantially triangular magnets that are provided in a coplanar fashion. First sides of the two substantially triangular magnets may be provided parallel to and distal from the organic binder, and second sides of the two substantially triangular magnets may be provided perpendicular to the organic binder and in contact with each other.

In a further aspect of the claimed invention, there is provided, a document including the optical article described above. The first reflective effect may be a widening of a first portion of a reflection from the optical article and a narrowing from a second portion of the reflection the optical article.

The second reflective effect may be a first lateral motion of a first portion of a reflection from the optical article that may be larger than a second lateral motion of a second portion of the reflection from the optical article.

The first reflective effect is a first movement of left and right portions of a reflection from the optical article that may be larger than a second movement of a center portion of the reflection from the optical article.

The second reflective effect may be a brightening of a first half of a reflection from the optical article and a darkening of a second half of the reflection from the optical article.

The first axis may be a horizontal axis and the second axis may be a vertical axis.

### BRIEF DESCRIPTION OF THE DRAWINGS

Figs. 1A-1E are diagrams of an optical article that is formed based on a funnel-shaped surface of revolution, not forming part of the claimed invention.
Fig. 2A and 2B are diagrams of another optical article that is formed based on a funnel-shaped surface of revolution, not forming part of the claimed invention.
Figs. 3A-3D are diagrams of an optical article that is formed based on a saddle-shaped surface of revolution.
Fig. 4 is a flow chart of an example process for forming an optical article based on a surface of revolution.

### DETAILED DESCRIPTION

The following detailed description of example implementations refers to the accompanying drawings. The same reference numbers in different drawings may identify the same or similar elements.

An optical article may generate a reflective effect based on an angle of light or a viewing angle. Some optical articles may use reflective magnetic platelets to create such a reflective effect. For example, magnetic platelets may be dispersed in an organic binder and coated on a substrate, such as a flexible substrate (e.g., a document, currency, a certificate, a transaction card, etc.). The magnetic platelets may be aligned in accordance with (e.g., using) a magnetic field, which may cause the magnetic platelets to exhibit the reflective properties of a shaped three-dimensional mirror. This may be referred to as a Fresnel-like reflective effect. The organic binder may be set or hardened (e.g., using curing, ultraviolet light, heat, epoxy, etc.). Notably, the optical article may be thin (e.g., may not be significantly thicker than the substrate) and flexible, which makes the optical article useful for currency and other such applications.

Some implementations described herein provide optical articles based on a surface of revolution. A surface of revolution is a three-dimensional surface generated by rotating a twodimensional curve about an axis. A surface of revolution may have azimuthal symmetry. Some implementations described herein may use a magnetic field that is generated based on a surface of revolution to create a reflective effect that is based on the surface of revolution. For example, some example described herein but not claimed may be based on a funnel-shaped surface of revolution, and may provide a reflective effect that resembles a funnel in some orientations. Other implementations described herein may be based on a saddle-shaped surface of revolution, and may provide a reflective effect that resembles a saddle in some orientations.

The above-described optical articles may have magnetic platelets that are aligned to cause a first reflective effect of the optical article when the substrate (or optical article) is rotated around a first axis, and to cause a second, different, reflective effect when the substrate or optical article is rotated around a second axis. The reflective effects, as well as magnet configurations to align the magnetic platelets accordingly, are described in more detail below. By providing reflective effects that are different when the optical article is rotated about different axes, complexity of the optical article is improved in comparison to optical articles that use a single axis of rotation. Thus, security of a document that uses the optical article is improved in comparison to documents using optical articles that use a single axis of rotation.

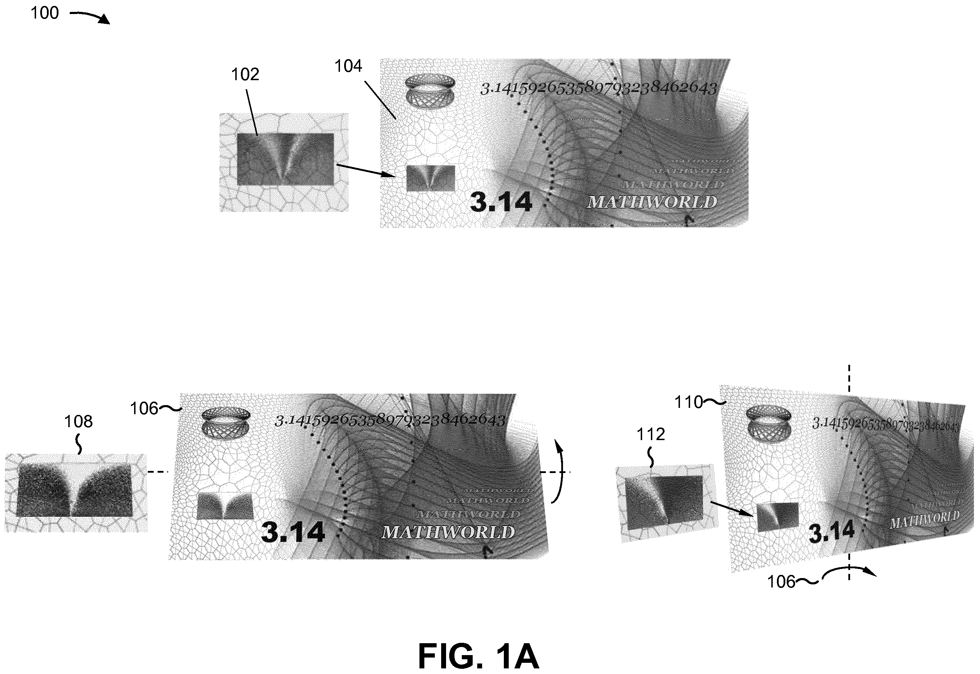

Figs. 1A-1E are diagrams of an example 100 of an optical article 102 that is formed based on a funnel-shaped surface of revolution, not forming part of the claimed invention. An expanded view of the optical article 102 in a first view (e.g., a head-on view without rotating a substrate 104 around an axis) is shown at the top of Fig. 1A. Here, the substrate 104 is a document, such as a currency note. The substrate 104 may not include the document. For example, the optical article 102 may be formed on a substrate that is affixed to the document (e.g., before or after the optical article 102 is formed).

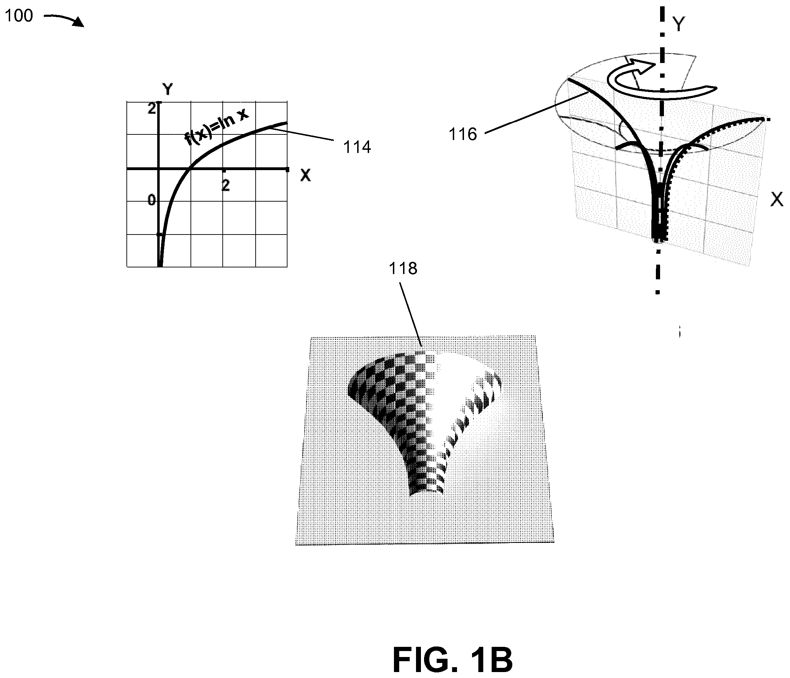

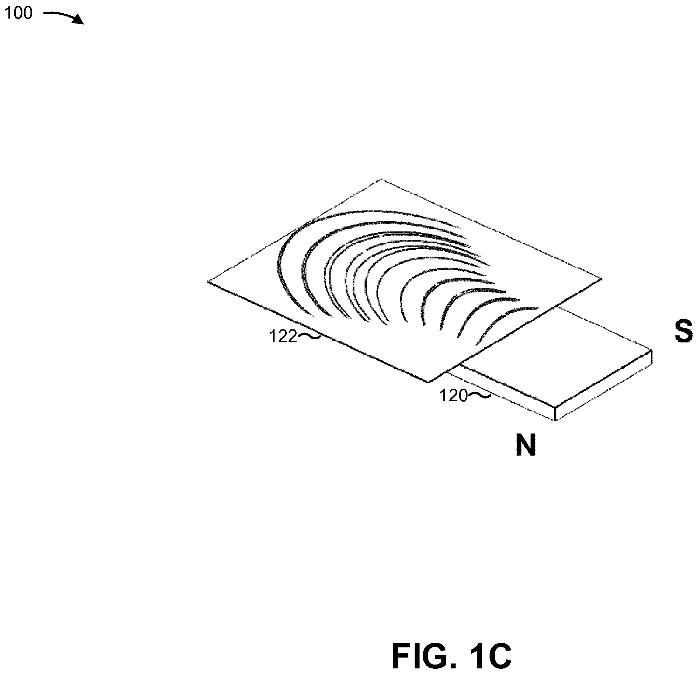

As shown, the optical article 102 exhibits a funnel-shaped reflection, which may be based on alignment of magnetic platelets of the optical article 102 with a magnetic field that is based on a funnel-shaped surface of revolution. This is described in more detail in connection with Figs. 1B and 1C, below.

As shown by reference number 106, when the substrate 104 (or the optical article 102) is rotated around a first axis (e.g., a horizontal axis), the rotation may cause a first reflective effect 108. Here, the first reflective effect 108 is a widening (in the horizontal direction) of a top of the funnel-shaped reflection and a narrowing (in the horizontal direction) of the bottom of the funnel-shaped reflection. This may be based on the alignment of the magnetic platelets with the funnel-shaped surface of revolution, as described in more detail below. The first reflective effect may be a widening of a first portion (e.g., the top) of a reflection, and a narrowing of a second portion (e.g., the bottom) of the reflection.

As shown by reference number 110, when the substrate 104 (or the optical article 102) is rotated around a second axis (e.g., a vertical axis and/or an axis orthogonal to the first axis), the rotation may cause a second reflective effect 112 that is different from the first reflective effect 108. Here, the second reflective effect 108 is a shifting to the left of a top of the funnel-shaped reflection while a bottom point of the funnel-shaped reflection remains substantially unmoved. In other words, the second reflective effect may be a first lateral motion of a first portion of a reflection (e.g., the shifting to the left or right of the top of the funnel-shaped reflection) that is larger than a second lateral motion of a second portion of the reflection (e.g., the bottom point remaining substantially unmoved).

Fig. 1B shows examples of the surface of revolution used to generate the optical article 102 shown in Fig. 1A, as well as a curve used to generate the surface of revolution. The curve is shown by reference number 114. As shown, the curve may be defined based on a natural logarithm. The curve may be defined based on another mathematical relationship, such as a logarithm and/or the like. As shown by reference number 116, the surface of revolution may be generated by rotating the curve around the Y-axis. A checkered depiction of the surface of revolution is shown by reference number 118 for clarity.

The surface of revolution shown in Fig. 1B is shown for illustrative purposes only. The exact magnetic field used to align the magnetic platelets may differ from what is shown in Fig. 1B based on variations in magnet fabrication, challenges in shaping the magnetic field, or for other reasons. For example, the deviation of the field may vary in a range from approximately 0.03125" to 2" or more based on choice of the designer and selection of magnet size. It is to be understood that the surfaces of revolutions described herein are provided for exemplary and illustrative purposes only.

Fig. 1C shows an example of a configuration of a magnet 120 that may provide a magnetic field that approximates the surface of revolution shown by reference numbers 116 and 118 of Fig. 1B. A plane of the optical article 102 is shown by reference number 122. As can be seen, the lines of magnetic field created by such a magnet may have different radii in the plane 122. Thus, an optical article 102 that provides the funnel-shaped reflective effect shown in Fig. 1A may be formed based on the surface of revolution 116, 118 shown in Fig. 1B using the magnet 120 shown in Fig. 1C.

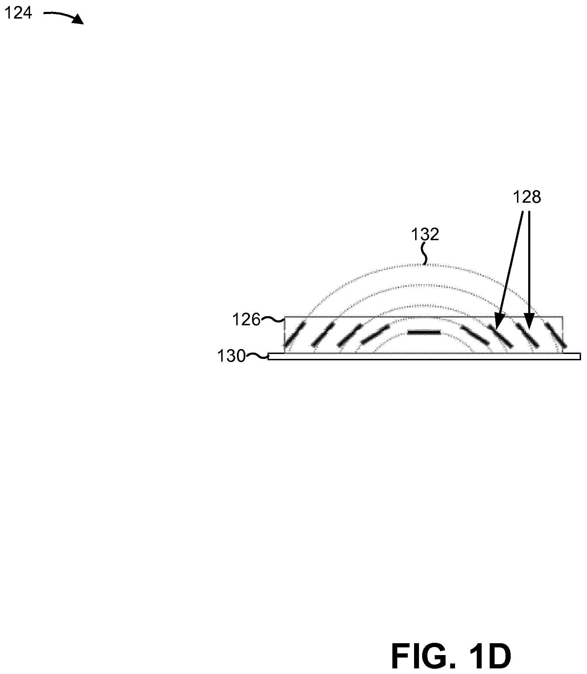

An example of an optical article 102 is shown by reference number 124 in Fig. 1D. For example, the example shown in Fig. 1D may represent a cross-section of the optical article 102 at a center of the optical article 102. As shown, the optical article 102 may include an organic binder 126 in which reflective magnetic platelets 128 are suspended. As further shown, the optical article 102 is provided on a substrate 130. The reflective magnetic platelets 128 may be aligned with magnetic field lines 132.

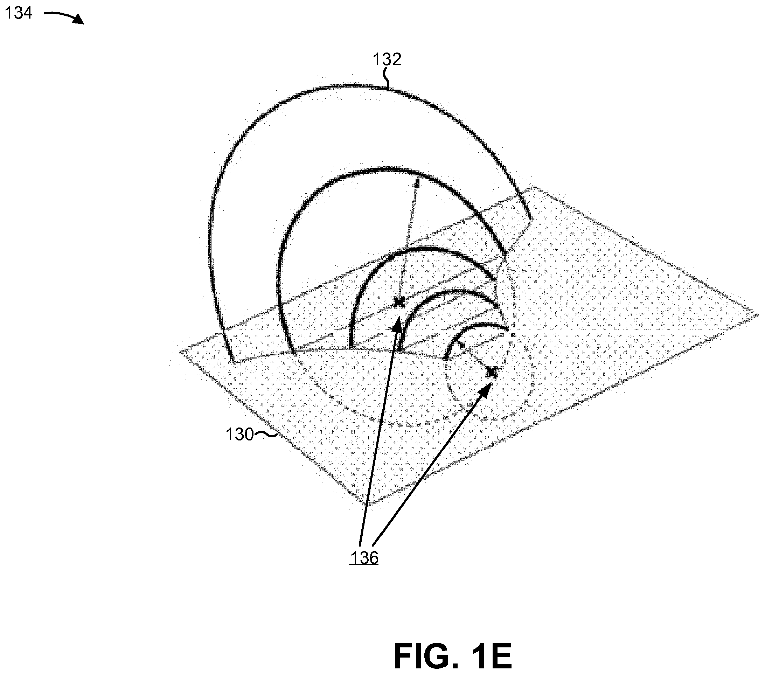

Fig. 1E shows an oblique view 134 of the magnetic field lines 132 of Fig. 1D. A central axis of the magnetic field represented by the magnetic field lines 132 is shown by the "x" symbols identified by reference number 136. As can be seen, the radii of the magnetic field lines 132 changes along the central axis. As shown, the central axis of the magnetic field is below the substrate 130 at a narrower cross-section of the magnetic field, and proceeds toward and through the substrate 130 as the magnetic field widens. Other orientations of the central axis are possible. For example, the central axis may be provided entirely above the substrate, entirely below the substrate, parallel to the substrate, proceeding through the substrate, and/or the like.

As indicated above, Figs. 1A-1E are provided as examples. Other examples are possible and may differ from what was described with regard to Figs. 1A-1E.

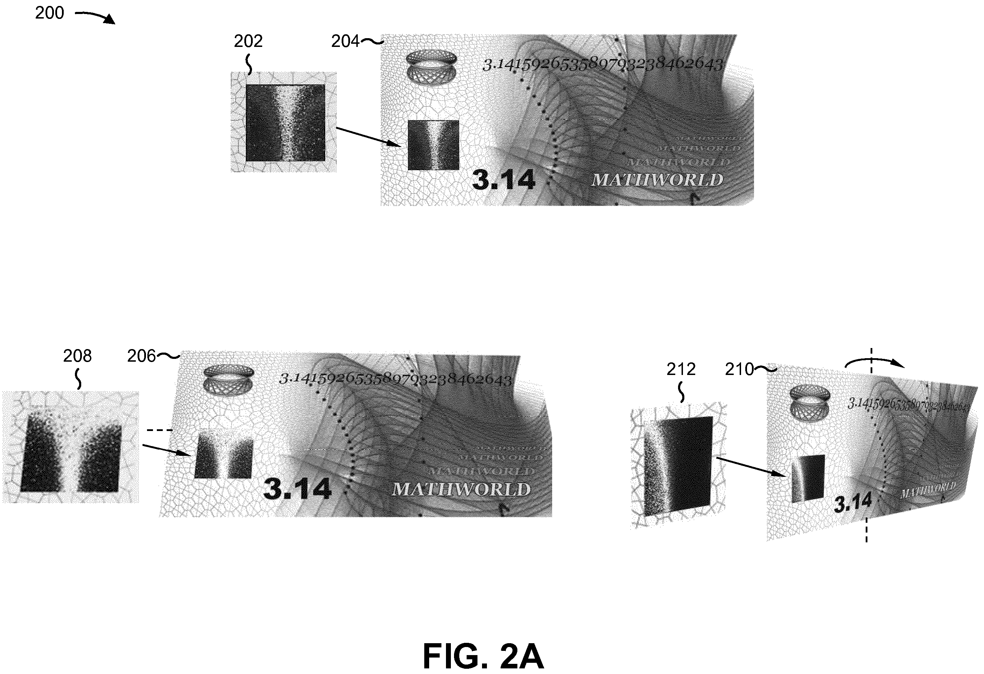

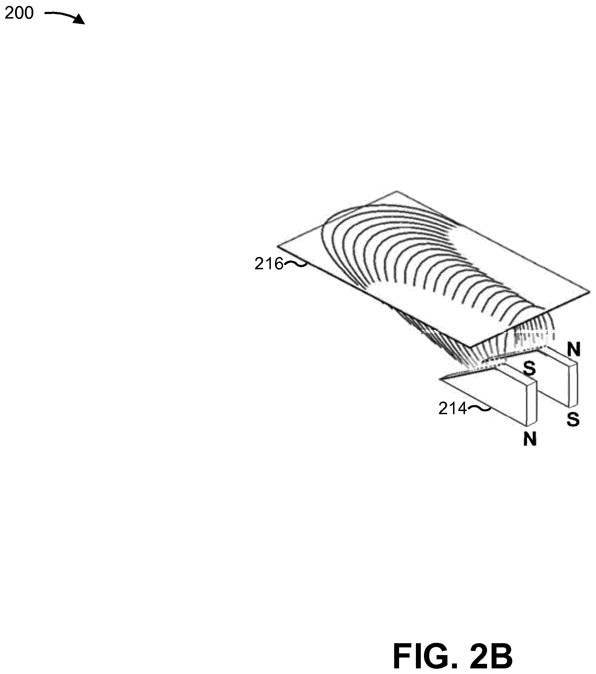

Figs. 2A and 2B are diagrams of an example 200 of another optical article that is formed based on a funnel-shaped surface of revolution, not forming part of the claimed invention. The surface of revolution used for example 200 may be substantially similar to the one used for example 100 of Figs. 1A-1D and, therefore, is not shown.

An expanded view of an optical article 202 in a first view (e.g., a head-on view without rotating a substrate 204 around an axis) is shown at the top of Fig. 2A. As shown, the optical article 202 exhibits a funnel-shaped reflection that is narrower at the top and wider at the bottom than the funnel-shaped reflection of optical article 102. This may be due to a difference in the shape and/or orientation of the magnets used to form the corresponding magnetic field, as described in connection with Fig. 2B, below.

As shown by reference number 206, when the substrate 204 (or the optical article 202) is rotated around a first axis (e.g., a horizontal axis), the rotation may cause a first reflective effect 208. Here, the first reflective effect 208 is a widening (in the horizontal direction) of a top of the funnel-shaped reflection and a narrowing (in the horizontal direction) of the bottom of the funnel-shaped reflection. As shown by reference number 210, when the substrate 204 (or the optical article 202) is rotated around a second axis (e.g., a vertical axis and/or an axis orthogonal to the first axis), the rotation may cause a second reflective effect 212 that is different from the first reflective effect 208. Here, the second reflective effect 212 is a shifting, to the left of a top of the funnel-shaped reflection.

Fig. 2B shows an example of a configuration of a set of magnets 214 that may provide a magnetic field that approximates a surface of revolution that may be used to create the optical article 202. A plane of the optical article 202 is shown by reference number 216. As shown, the arrangement of the set of magnets 214 may provide a magnetic field with an elongated shape in comparison to the magnetic field shown in Fig. 1C. More than two magnets 214 may be used. For example, any number of magnets 214 may be used to generate the magnetic field shown. Thus, an optical article 202 that provides the funnel-shaped reflective effect shown in Fig. 2A may be formed using the set of magnets 214 shown in Fig. 2B.

As indicated above, Figs. 2A and 2B are provided merely as an example. Other examples are possible and may differ from what was described with regard to Figs. 2A and 2B.

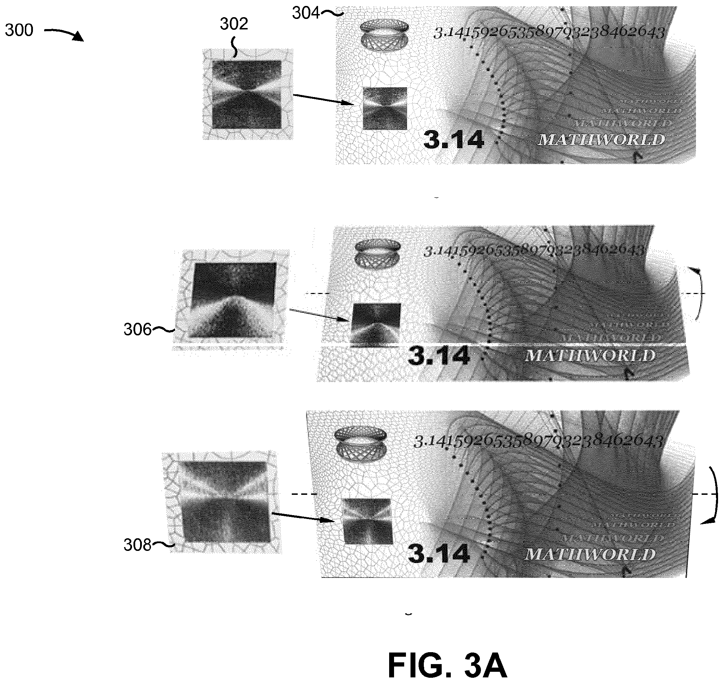

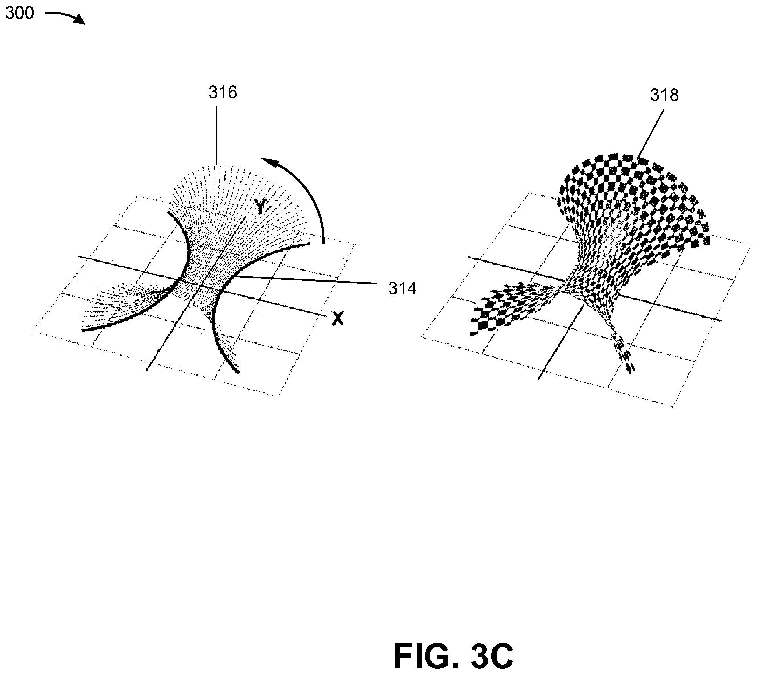

Figs. 3A-3D are diagrams of an example 300 of an optical article that is formed based on a saddle-shaped surface of revolution according to the invention. An expanded view of an optical article 302 in a first view (e.g., a head-on view without rotating a substrate 304 around an axis) is shown at the top of Fig. 3A. As shown, the optical article 302 exhibits a saddle-shaped reflective effect (for an example of a saddle shape, refer to the saddle-shaped surface of revolution of Fig. 3C, described in more detail below).

As shown by reference number 306, when the optical article 302 is rotated in a first direction about a first axis (e.g., a horizontal axis), the rotation may cause a first reflective effect, in which the reflection moves downward at the edges while the center remains substantially unmoved. For example, left and right portions of the reflection may bend downward. As shown by reference number 308, when the optical article 302 is rotated in a second direction about the first axis, the reflection moves upward at the edges while the center remains substantially unmoved. For example, the left and right portions of the reflection may bend upward. As can be seen, the regions of the optical article 302 that are not occupied by the band of reflected light (e.g., the triangular sections at the top center and the bottom center of the optical article 302) remain dark when the optical article 302 is rotated about the first axis.

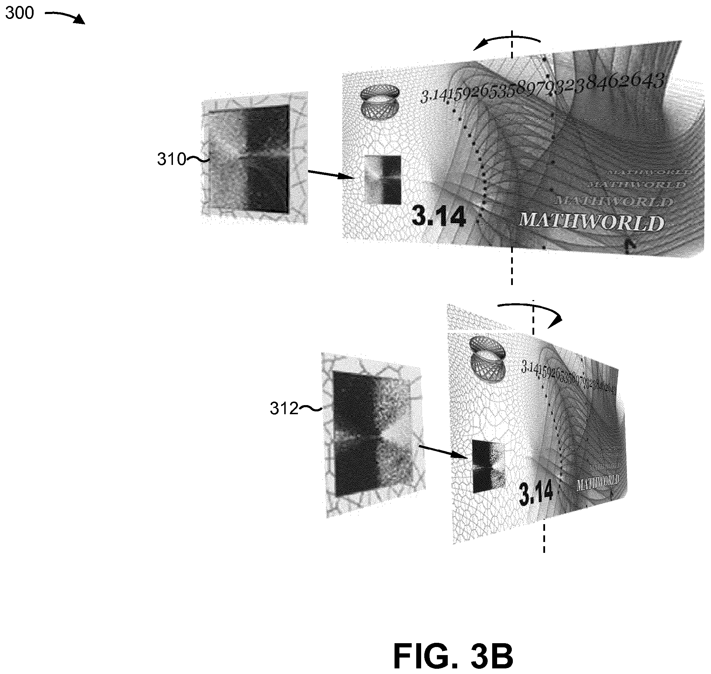

As shown in Fig. 3B, and by reference number 310, when the optical article 302 is rotated in a first direction about a second axis (e.g., a vertical axis and/or an axis orthogonal to the first axis), the rotation may cause a second reflective effect. Here, the second reflective effect is a brightening of the left half (e.g., a first half) of the optical article 302 and a darkening of the right half (e.g., a second half) of the optical article 302. Similarly, as shown by reference number 312, when the optical article 302 is rotated in a second direction about the second axis, the second reflective effect is the illumination of the right half of the optical article 302.

Fig. 3C shows an example of a curve 314 that may be used to generate a saddle-shaped surface of revolution 316, 318. In some implementations, the curve 314 may be a parabola (e.g., defined by the equation x = b*y^2 + c (b and c not shown in Fig. 3C)) or a hyperbola, and the surface of revolution 316, 318 may be a hyperbolic parabola or a section or a hyperbolic parabola.

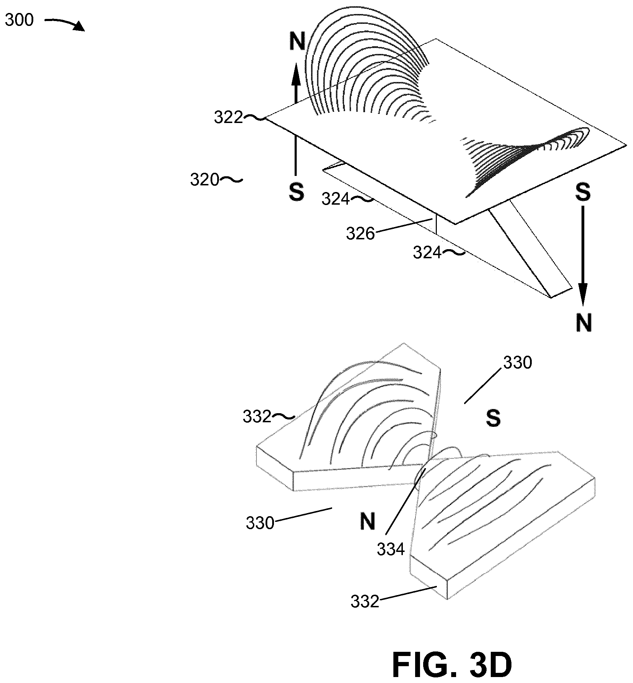

Fig. 3D shows examples of configurations of magnets that can be used to generate magnetic fields based on the saddle-shaped surface of revolution 316, 318 in order to form the optical article 302. As shown by reference number 320, a first configuration of magnets may include substantially triangular magnets provided in a coplanar fashion in a plane orthogonal to the plane 322 of the optical article 302. For example, first sides 324 of the two substantially triangular magnets may be provided parallel to and distal from the plane 322, and second sides 326 of the two substantially triangular may be provided in a plane perpendicular to the organic binder and in contact with (or spaced near) one another. As shown by reference number 328, a second configuration may include a magnet with triangular notches 330. In some implementations, the second configuration may use two triangular magnets that meet at a center point with rectangular portions 332 distal from the center point 334.

As indicated above, Figs. 3A-3D are provided merely as an example. Other examples are possible and may differ from what was described with regard to Figs. 3A-3D.

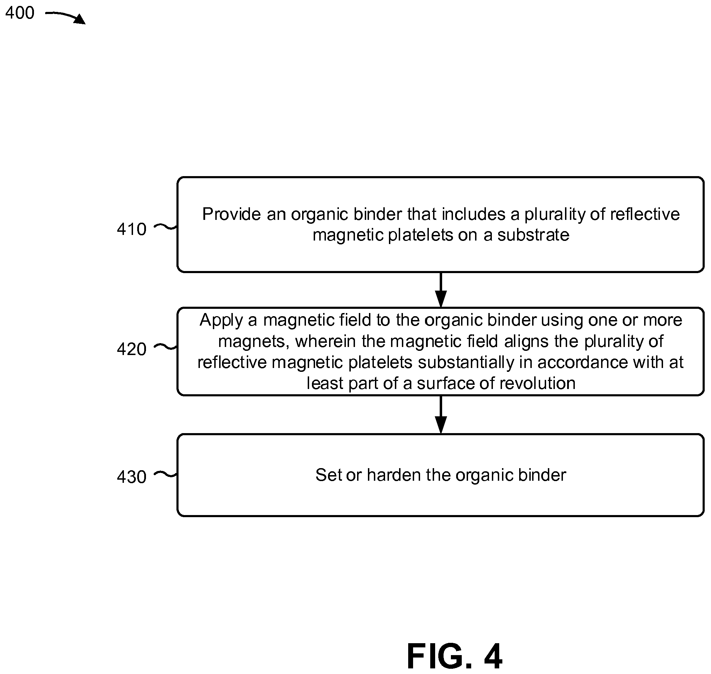

Fig. 4 is a flow chart of an example process 400 for forming an optical article in accordance with various implementations described herein. One or more of the operations described in Fig. 4 may be performed by a system, such as a system capable of providing an organic binder that includes reflective magnetic platelets, applying a magnetic field to the organic binder, and setting or hardening the organic binder.

As shown in Fig. 4, process 400 may include providing an organic binder that includes a plurality of reflective magnetic platelets on a substrate (block 410). For example, an organic binder may be provided on a substrate. The organic binder may be an ink or another substance that can be set or hardened by a chemical reaction, and that is at least partially transparent. In some implementations, the organic binder may be a highly reactive UV ink for sheetfed and web offset presses that cures using UV lamp technology, such as a UV-curable ink (e.g., XCURA EVO ink by Flint Group, Ultraking 6100 FAST CURE by Flint Group, etc). For example, a UV-curable ink may include four components: monomers, oligomers, pigments, and photoinitiators. The monomers may provide a building block of the ink, and may contribute certain properties such as softness or hardness of the ink when cured, as well as flexibility or elongation characteristics of the ink for varying types of applications. The oligomers in the ink formulation include reactive resins and uniquely formulated adhesive components for printing on a wide range of different substrates. The pigments provide the color. When the photoinitiators are exposed to UV light, the oligomers and monomers cross-link or polymerize.

The organic binder may include a plurality of reflective magnetic platelets. The platelets may include substantially flat particles with dimensions in a range from approximately 10µm x10um x 0.5µm to approximately 100µm x 100µm x10µm. The particles may include layers of different materials. One or more of the materials can be magnetized in the field of an external magnet or external magnet. In some cases, the reflective magnetic platelet is one of many security pigment particles. The reflective magnetic may include a layer made from magnetically soft or hard material, such as a ferromagnetic alloys. The central core may be coated with two or more layers of aluminum as a reflector. The aluminum layers may be coated with a transparent material such as MgF₂, SiO₂, or the like. A semi-transparent chromium layer may be coated on the top of the transparent material. This particular material is known as a security optically variable magnetic pigment (OVMP). The pigment may be mixed with a UV-curable organic binder described above to form a security optically variable magnetic ink (OVMI) used for printing of anti-counterfeiting security elements on documents of value.

In some implementations, the substrate may be a document, or may be affixed to a document. In some implementations, the organic binder and the platelets (and optionally the substrate) may be referred to collectively as an optical article.

As further shown in Fig. 4, process 400 may include applying a magnetic field to the organic binder using one or more magnets, wherein the magnetic field aligns the plurality of reflective magnetic platelets substantially in accordance with at least part of a surface of revolution (block 420). For example, a magnetic field may be applied to the organic binder using one or more magnets. In some implementations, an electrical or electromagnetic field may be used to generate a magnetic field to be applied to the organic binder to align the plurality of reflective magnetic platelets. For example, the electrical field may have substantially the shape described with regard to examples 100, 200, and/or 300. The magnetic field may align the plurality of reflective magnetic platelets substantially in accordance with at least part of a surface of revolution. For example, the magnetic field may have substantially the shape of the at least part of the surface of revolution. In some implementations, the plurality of reflective magnetic platelets may be aligned to cause a first reflective effect of the optical article when the substrate is rotated around a first axis. Furthermore, the plurality of reflective magnetic platelets may be aligned to cause a second reflective effect of the optical article when the substrate is rotated around a second axis. The first reflective effect may be different than the second reflective effect.

As further shown in Fig. 4, process 400 may include setting or hardening the organic binder (block 430). For example, the organic binder (e.g., the ink) may be set or hardened. This may lock the reflective platelets in the alignment of the magnetic (or electrical or electromagnetic) field. In some implementations, the organic binder may be set or hardened using an ultraviolet light, using heat, based on a curing technique, and/or the like.

Process 400 may include additional implementations, such as any single implementation or any combination of implementations described below and/or in connection with one or more other processes described elsewhere herein.

In some examples, not claimed, the surface of revolution is defined based on a natural logarithm and the surface of revolution may be substantially funnel-shaped. In some implementations, the surface of revolution is defined based on a parabola or hyperbola. In some implementations, the surface of revolution is substantially shaped as a hyperbolic paraboloid. In some implementations, the first axis is a horizontal axis and the second axis is a vertical axis. In some implementations, the first axis is orthogonal to the second axis.

In some examples, not claimed, the one or more magnets include two magnets provided parallel to each other, and corners of the two magnets are cut off or rounded. In some implementations, the one or more magnets include two substantially triangular magnets that are provided in a coplanar fashion. In some implementations, first sides of the two substantially triangular magnets are provided parallel to and distal from the organic binder, and wherein second sides of the two substantially triangular magnets are provided perpendicular to the organic binder and in contact with each other. In some implementations, the one or more magnets include a magnet with two or more triangular notches.

**In** some implementations, the first reflective effect is a widening of a first portion of a reflection from the optical article and a narrowing from a second portion of the reflection the optical article. In some implementations, the second reflective effect is a first lateral motion of a first portion of a reflection from the optical article that is larger than a second lateral motion of a second portion of the reflection from the optical article.

The first reflective effect is a first movement of left and right portions of a reflection from the optical article that is larger than a second movement of a center portion of the reflection from the optical article. In some implementations, the second reflective effect is a brightening of a first half of a reflection from the optical article and a darkening of a second half of the reflection from the optical article.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

In this way, reflective effects that are different when an optical article is rotated about different axes are provided. This may improve complexity of the optical article. Thus, security of a document that uses the optical article is improved.

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, and/or a combination of hardware and software.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware can be designed to implement the systems and/or methods based on the description herein.

Also, as used herein, the articles "a" and "an" are intended to include one or more items, and may be used interchangeably with "one or more." Furthermore, as used herein, the term "set" is intended to include one or more items (e.g., related items, unrelated items, a combination of related items, and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

## Claims

1. An optical article (302) printed on a substrate (304), comprising:
an organic binder; and
a plurality of reflective magnetic platelets provided in the organic binder, wherein the plurality of reflective magnetic platelets are substantially aligned in accordance with at least part of a surface of revolution (316, 318), and wherein the plurality of reflective magnetic platelets are aligned to cause a first reflective effect of the optical article (302) when the substrate (304) is rotated around a first axis and to cause a second reflective effect of the optical article (302) when the substrate (304) is rotated around a second axis,
wherein the first reflective effect is different from the second reflective effect; **characterised in that** the first reflective effect is a first movement of left and right portions of a reflection from the optical article (302) that is larger than a second movement of a center portion of the reflection from the optical article (302).

2. The optical article (302) of claim 1, wherein the surface of revolution (316, 318) is substantially shaped as a hyperbolic paraboloid.

3. The optical article (302) of claim 1, wherein the surface of revolution (316, 318) is defined based on a parabola, or a hyperbola.

4. The optical article (302) of claim 1, wherein the first axis is a horizontal axis and the second axis is a vertical axis and/or the first axis is orthogonal to the second axis.

5. A method for forming an optical article (302) on a substrate (304), comprising:
providing an organic binder that includes a plurality of reflective magnetic platelets on the substrate (304);
applying a magnetic field to the organic binder using one or more magnets, wherein the magnetic field aligns the plurality of reflective magnetic platelets substantially in accordance with at least part of a surface of revolution (316, 318),
wherein the plurality of reflective magnetic platelets are aligned to cause a first reflective effect of the optical article (302) when the substrate (304) is rotated around a first axis and to cause a second reflective effect of the optical article (302) when the substrate (304) is rotated around a second axis,
wherein the first reflective effect is different from the second reflective effect; and setting or hardening the organic binder;
**characterised in that** the one or more magnets include two substantially triangular magnets that are provided in a coplanar fashion, or a magnet with two or more triangular notches (330).

6. The method of claim 5, wherein the surface of revolution (316, 318) is substantially shaped as a hyperbolic paraboloid.

7. The method of claim 5, wherein first sides (324) of the two substantially triangular magnets are provided parallel to and distal from the organic binder, and wherein second sides (326) of the two substantially triangular magnets are provided perpendicular to the organic binder and in contact with each other.

8. A document comprising the optical article (302) of claim 1.

9. The document of claim 8, wherein the first reflective effect is a widening of a first portion of a reflection from the optical article and a narrowing from a second portion of the reflection the optical article.

10. The document of claim 8, wherein the second reflective effect is a first lateral motion of a first portion of a reflection from the optical article that is larger than a second lateral motion of a second portion of the reflection from the optical article.

11. The document of claim 8, wherein the second reflective effect is a brightening of a first half of a reflection from the optical article (302) and a darkening of a second half of the reflection from the optical article (302).

12. The document of claim 8, wherein the first axis is a horizontal axis and the second axis is a vertical axis.

## Patentansprüche

1. Ein optischer Artikel (302), der auf ein Substrat (304) gedruckt ist und Folgendes beinhaltet:
ein organisches Bindemittel; und
eine Vielzahl von reflektierenden Magnetplättchen, die in dem organischen Bindemittel bereitgestellt sind,
wobei die Vielzahl von reflektierenden Magnetplättchen im Wesentlichen gemäß mindestens einem Teil einer Rotationsfläche (316, 318) ausgerichtet ist und wobei die Vielzahl von reflektierenden Magnetplättchen ausgerichtet ist, um einen ersten Reflexionseffekt des optischen Artikels (302) zu bewirken, wenn das Substrat (304) um eine erste Achse gedreht wird, und um einen zweiten Reflexionseffekt des optischen Artikels (302) zu bewirken, wenn das Substrat (304) um eine zweite Achse gedreht wird,
wobei sich der erste Reflexionseffekt von dem zweiten Reflexionseffekt unterscheidet; **dadurch gekennzeichnet, dass** der erste Reflexionseffekt eine erste Bewegung von einem linken und einem rechten Abschnitt einer Reflexion von dem optischen Artikel (302) ist, die größer als eine zweite Bewegung eines mittleren Abschnitts der Reflexion von dem optischen Artikel (302) ist.

2. Optischer Artikel (302) gemäß Anspruch 1, wobei die Rotationsfläche (316, 318) im Wesentlichen wie ein hyperbolisches Paraboloid geformt ist.

3. Optischer Artikel (302) gemäß Anspruch 1, wobei die Rotationsfläche (316, 318) basierend auf einer Parabel oder einer Hyperbel definiert ist.

4. Optischer Artikel (302) gemäß Anspruch 1, wobei die erste Achse eine horizontale Achse ist und die zweite Achse eine vertikale Achse ist und/oder die erste Achse orthogonal zu der zweiten Achse ist.

5. Ein Verfahren zum Bilden eines optischen Artikels (302) auf einem Substrat (304), das Folgendes beinhaltet:
Bereitstellen eines organischen Bindemittels, das eine Vielzahl von reflektierenden Magnetplättchen umfasst, auf dem Substrat (304);
Anlegen eines Magnetfelds an das organische Bindemittel unter Verwendung von einem oder mehreren Magneten, wobei das Magnetfeld die Vielzahl von reflektierenden Magnetplättchen im Wesentlichen gemäß mindestens einem Teil einer Rotationsfläche (316, 318) ausrichtet,
wobei die Vielzahl von reflektierenden Magnetplättchen ausgerichtet ist, um einen ersten Reflexionseffekt des optischen Artikels (302) zu bewirken, wenn das Substrat (304) um eine erste Achse gedreht wird, und um einen zweiten Reflexionseffekt des optischen Artikels (302) zu bewirken, wenn das Substrat (304) um eine zweite Achse gedreht wird,
wobei sich der erste Reflexionseffekt von dem zweiten Reflexionseffekt unterscheidet; und Verfestigen oder Härten des organischen Bindemittels;
**dadurch gekennzeichnet, dass** der eine oder die mehreren Magnete zwei im Wesentlichen dreieckige Magnete, die in einer koplanaren Weise bereitgestellt sind, oder einen Magnet mit zwei oder mehr dreieckigen Kerben (330) umfassen.

6. Verfahren gemäß Anspruch 5, wobei die Rotationsfläche (316, 318) im Wesentlichen wie ein hyperbolisches Paraboloid geformt ist.

7. Verfahren gemäß Anspruch 5, wobei erste Seiten (324) der zwei im Wesentlichen dreieckigen Magnete parallel zu und distal von dem organischen Bindemittel bereitgestellt sind und wobei zweite Seiten (326) der zwei im Wesentlichen dreieckigen Magnete senkrecht zu dem organischen Bindemittel und in Kontakt miteinander bereitgestellt sind.

8. Ein Dokument, das den optischen Artikel (302) gemäß Anspruch 1 beinhaltet.

9. Dokument gemäß Anspruch 8, wobei der erste Reflexionseffekt eine Verbreiterung eines ersten Abschnitts einer Reflexion von dem optischen Artikel und eine Verengung von einem zweiten Abschnitt der Reflexion des optischen Artikels ist.

10. Dokument gemäß Anspruch 8, wobei der zweite Reflexionseffekt ein erster lateraler Bewegungsvorgang eines ersten Abschnitts einer Reflexion von dem optischen Artikel ist, der größer als ein zweiter lateraler Bewegungsvorgang eines zweiten Abschnitts der Reflexion von dem optischen Artikel ist.

11. Dokument gemäß Anspruch 8, wobei der zweite Reflexionseffekt eine Aufhellung einer ersten Hälfte einer Reflexion von dem optischen Artikel (302) und eine Abdunkelung einer zweiten Hälfte der Reflexion von dem optischen Artikel (302) ist.

12. Dokument gemäß Anspruch 8, wobei die erste Achse eine horizontale Achse ist und die zweite Achse eine vertikale Achse ist.

## Revendications

1. Un article optique (302) imprimé sur un substrat (304), comprenant :
un liant organique ; et
une pluralité de plaquettes magnétiques réfléchissantes fournies dans le liant organique,
où la pluralité de plaquettes magnétiques réfléchissantes sont substantiellement alignées conformément à au moins une partie d'une surface de révolution (316, 318), et où la pluralité de plaquettes magnétiques réfléchissantes sont alignées pour provoquer un premier effet réfléchissant de l'article optique (302) lorsque le substrat (304) est tourné autour d'un premier axe et pour provoquer un deuxième effet réfléchissant de l'article optique (302) lorsque le substrat (304) est tourné autour d'un deuxième axe, où le premier effet réfléchissant est différent du deuxième effet réfléchissant ;
**caractérisé en ce que** le premier effet réfléchissant est un premier mouvement de portions gauche et droite d'une réflexion provenant de l'article optique (302) qui est plus grand qu'un deuxième mouvement d'une portion centrale de la réflexion provenant de l'article optique (302).

2. L'article optique (302) de la revendication 1, où la surface de révolution (316, 318) est substantiellement en forme de paraboloïde hyperbolique.

3. L'article optique (302) de la revendication 1, où la surface de révolution (316, 318) est définie sur la base d'une parabole, ou d'une hyperbole.

4. L'article optique (302) de la revendication 1, où le premier axe est un axe horizontal et le deuxième axe est un axe vertical et/ou le premier axe est orthogonal au deuxième axe.

5. Un procédé pour la formation d'un article optique (302) sur un substrat (304), comprenant :
la fourniture d'un liant organique qui inclut une pluralité de plaquettes magnétiques réfléchissantes sur le substrat (304) ;
l'application d'un champ magnétique au liant organique en utilisant un ou plusieurs aimants, où le champ magnétique aligne la pluralité de plaquettes magnétiques réfléchissantes substantiellement conformément à au moins une partie d'une surface de révolution (316, 318),
où la pluralité de plaquettes magnétiques réfléchissantes sont alignées pour provoquer un premier effet réfléchissant de l'article optique (302) lorsque le substrat (304) est tourné autour d'un premier axe et pour provoquer un deuxième effet réfléchissant de l'article optique (302) lorsque le substrat (304) est tourné autour d'un deuxième axe, où le premier effet réfléchissant est différent du deuxième effet réfléchissant ;
et la prise ou le durcissement du liant organique ;
**caractérisé en ce que** les un ou plusieurs aimants incluent deux aimants substantiellement triangulaires qui sont fournis d'une manière coplanaire, ou un aimant avec deux encoches triangulaires (330) ou plus.

6. Le procédé de la revendication 5, où la surface de révolution (316, 318) est substantiellement en forme de paraboloïde hyperbolique.

7. Le procédé de la revendication 5, où des premiers côtés (324) des deux aimants substantiellement triangulaires sont fournis parallèlement au et distalement par rapport au liant organique, et où des deuxièmes côtés (326) des deux aimants substantiellement triangulaires sont fournis perpendiculairement au liant organique et en contact l'un avec l'autre.

8. Un document comprenant l'article optique (302) de la revendication 1.

9. Le document de la revendication 8, où le premier effet réfléchissant est un élargissement d'une première portion d'une réflexion provenant de l'article optique et un rétrécissement d'une deuxième portion de la réflexion provenant de l'article optique.

10. Le document de la revendication 8, où le deuxième effet réfléchissant est un premier mouvement latéral d'une première portion d'une réflexion provenant de l'article optique qui est plus grand qu'un deuxième mouvement latéral d'une deuxième portion de la réflexion provenant de l'article optique.

11. Le document de la revendication 8, où le deuxième effet réfléchissant est un éclaircissement d'une première moitié d'une réflexion provenant de l'article optique (302) et un assombrissement d'une deuxième moitié de la réflexion provenant de l'article optique (302).

12. Le document de la revendication 8, où le premier axe est un axe horizontal et le deuxième axe est un axe vertical.
